# EUROPÄISCHE PATENTSCHRIFT

(11) **EP 3 568 441 B1**
(45) Veröffentlichungstag und Bekanntmachung des Hinweises auf die Patenterteilung: **01.01.2025**
(21) Anmeldenummer: 18701119.2
(22) Anmeldetag: 10.01.2018
(51) Int. Cl.: C09D 1/00, A47J 36/02, B05D 5/08, C09D 5/00, F24C 15/00, C09D 7/61

(54) **BESCHICHTUNGSMATERIAL FÜR SELBSTREINIGENDE BESCHICHTUNG UND VERFAHREN ZUR HERSTELLUNG**
COATING MATERIAL FOR A SELF-CLEANING COATING, AND METHOD FOR PRODUCING SAME
MATÉRIAU DE REVÊTEMENT POUR REVÊTEMENT AUTO-NETTOYANT ET PROCÉDÉ DE FABRICATION

(30) Priorität: 16.01.2017 DE 102017200565
(43) Veröffentlichungstag der Anmeldung: 20.11.2019
(73) Patentinhaber: BSH Hausgeräte GmbH, 81739 München (DE)
(72) Erfinder: BERNHARDT, Silke, 57460 Etzling (FR); JÖRDENS, Frank, 83278 Traunstein (DE); MEYER, Frank, 66386 St. Ingbert (DE); SALOMON, Jürgen, 83308 Trostberg (DE); SCHMIDMAYER, Gerhard, 83093 Bad Endorf (DE)
(86) Internationale Anmeldenummer: PCT/EP2018/050490
(87) Internationale Veröffentlichungsnummer: WO 2018/130534

(56) Entgegenhaltungen:
- WO-A2-03/027348
- DE-A1- 10 150 825
- DE-A1- 3 942 236
- GB-A- 1 389 007
- US-A1- 2016 053 121
- US-A1- 2016 236 174

## Beschreibung

Die vorliegende Erfindung bezieht sich auf ein Beschichtungsmaterial für eine selbstreinigende Beschichtung auf einem Teil an bzw. in einem Koch-, Brat-, Back- oder Grillgerät zum Entfernen von Lebensmittelresten ohne mechanische Einwirkung, sowie auf ein Verfahren zur Herstellung einer selbstreinigenden Beschichtung auf einem Teil an bzw. in einem Koch-, Brat-, Back- oder Grillgerät, sowie einen Teil an bzw. in einem Koch-, Brat-, Back- oder Grillgerät, umfassend diese Beschichtung.

Im Stand der Technik sind bereits einige selbstreinigende Beschichtungen an bzw. in einem Koch-, Brat-, Back- oder Grillgerät bekannt, durch die Lebensmittelreste ohne mechanische Einwirkungen entfernt werden.

Insbesondere zeigt die DE 101 50 825 A1 eine solche selbstreinigende Beschichtung, die poröse Teilchen und einen partikulären Binder aufweist. In einer Ausführungsform der DE 101 50 825 A1 werden die Binder über einen Sol-Gel-Prozess hergestellt und weisen eine mittlere Partikelgröße von kleiner als 100 nm auf. Alternativ wird ein Binder auf der Basis von Glas oder Ton etc. verwendet, wobei die Partikel dann einen Durchmesser von 0,5 bis 10 µm aufweisen. Diese Binder werden flammpyrolytisch und/oder durch Mahlen hergestellt.

Aus der WO 03/027348 A2 ist weiterhin ein Verfahren zur Herstellung einer porösen keramischen Schicht bekannt, wobei ein poröses keramisches Pulver mit einem anorganischen Bindersystem, das mindestens ein nanoskaliges Pulver sowie ein Lösungsmittel enthält, zu einem Versatz gemischt wird. Das nanoskalige Pulver des Bindersystems hat dabei bevorzugt eine mittlere Partikelgröße von unter 100 nm. Die nanoskaligen Pulver der WO 03/027348 A2 werden flammpyrolytisch hergestellt.

Die US 2016/053121 A1 offenbart eine Gipsplatte, die eine Gipsschicht und mindestens eine auf dieser angeordnete Verkleidung umfasst, wobei die Verkleidung mit einem Beschichtungsschlicker beschichtet ist, der ein mikroporöses Material umfasst, wobei das mikroporöse Material Agglomerate aus gefällter Kieselsäure umfasst.

Die DE 39 42 236 A1 offenbart katalytische Beschichtungsmittel für Oberflächen von Koch-, Back-, Brat- oder Grillgeräten, ein Verfahren zur Herstellung dieser Beschichtungsmittel und Koch-, Back-, Brat- oder Grillgeräte oder deren Bestandteile mit Oberflächen, die mit solchen Beschichtungsmitteln beschichtet sind.

Die GB 1 389 007 A offenbart ein Substrat mit einer selbstreinigenden Ofenbeschichtung, die Emaille und einen oder mehrere Oxidationskatalysatoren enthält und anhaftende poröse Aggregate umfasst, wobei jedes poröse Aggregatteilchen anhaftende Katalysatorteilchen und Emailleteilchen enthält.

Die DE 10 150 825 A1 offenbart ein Teil an bzw. in einem Koch-, Brat-, Back- oder Grillgerät mit einer selbstreinigenden Beschichtung, durch die Lebensmittelreste ohne mechanische Einwirkung entfernt werden, wobei die Beschichtung eine Struktur aus (a) porösen Teilchen A und (b) einem Binder aufweist, wobei die porösen Teilchen A in ihren Poren keine feste oder flüssige Zweitphase aufweisen.

Die US 2016/236174 A1 offenbart ein Verfahren zur Herstellung von Titandioxidteilchen mit einer gewünschten Morphologie. Das Verfahren umfasst die Bereitstellung eines Titandioxid-Sols und das anschließende Trocknen des Sols, um getrocknete TitandioxidTeilchen zu erhalten.

Die im Stand der Technik offenbarten Beschichtungen haben aber ungenügende Bindungseigenschaften und führen zu lockeren, instabilen Beschichtungen, insbesondere bei hohen Betriebstemperaturen und/oder bei längerem Gebrauch. Weiter sind die Herstellungskosten der herkömmlichen Beschichtungen aufgrund der Verwendung von Binderpartikeln, die über einen Sol-Gel-Prozess oder flammpyrolytisch erzeugt wurden, hoch und mit sehr großem Aufwand verbunden.

Somit ist es die Aufgabe der vorliegenden Erfindung ein Beschichtungsmaterial bereitzustellen, geeignet für eine selbstreinigende Beschichtung auf einem Teil an bzw. in einem Koch-, Brat-, Back- oder Grillgerät, die eine Entfernung von Lebensmittelresten ohne mechanische Einwirkung erlaubt, wobei die Beschichtung zusätzlich eine verbesserte Haftung zum Substrat aufweist. Weiter liegt die Aufgabe der vorliegenden Erfindung im Bereitstellen eines Verfahrens zur Herstellung einer selbstreinigenden Beschichtung auf einem Teil bzw. in einem Koch-, Brat-, Back- oder Grillgerät, das effektiv und kostengünstiger als herkömmliche Verfahren durchgeführt werden kann.

Diese Aufgabe wird mit dem Beschichtungsmaterial nach Anspruch 1 gelöst. Bevorzugte Ausführungsformen des Beschichtungsmaterials sind in den Unteransprüchen 2 bis 6 beschrieben, die auch in Kombination untereinander erfindungsgemäß umfasst sind. Weiter wird die Aufgabe durch das Verfahren nach Anspruch 7 gelöst. Bevorzugte Ausführungsformen des Verfahrens sind in den Ansprüchen 8 bis 13 beschrieben, die auch in Kombination untereinander umfasst sind. Die Aufgabe wird weiter durch ein Teil an bzw. in einem Koch-, Brat-, Back- oder Grillgerät nach Anspruch 14, sowie durch ein Koch-, Brat-, Back- und Grillgerät nach Anspruch 15 gelöst.

Das Beschichtungsmaterial gemäß Anspruch 1 der vorliegenden Erfindung ist geeignet für eine selbstreinigende Beschichtung auf einem Teil bzw. in einem Koch-, Brat-, Back- oder Grillgerät zum Entfernen von Lebensmittelresten ohne mechanische Einwirkung. Das Beschichtungsmaterial weist poröse Partikel aus Al₂O₃ und einen Binder auf, wobei der Binder aus gefällten, anorganischen Partikeln besteht, die ausgewählt sind aus der Gruppe, umfassend Al₂O₃, TiO₂, ZrO₂ oder Gemischen davon, wobei die gefällten, anorganischen Partikel poröse Partikel sind, die eine spezifische BET Oberfläche von 200-500 m²/g besitzen.

Der Binder hat die Funktion, die porösen Partikel untereinander und mit dem Substrat zu verbinden und trotzdem die poröse Struktur der Beschichtung zu erhalten. Durch den Einsatz von gefällten, anorganischen Partikeln als Binder gelingt es, ein Beschichtungsmaterial herzustellen, das eine verbesserte Haftung zum Substrat, d.h. zum Teil an bzw. in einem Koch-, Brat-, Back- oder Grillgerät aufweist, insbesondere im Vergleich zu Systemen, die unter Verwendung von Partikeln hergestellt wurden, die mit einem Sol-Gel-Prozess oder flammpyrolytisch erzeugt wurden.

Unerwartet hat sich gezeigt, dass durch den Einsatz derartiger Partikel, die einfacher und kostengünstiger herzustellen sind, die Probleme überwunden werden können, die mit den Systemen aus dem Stand der Technik auftreten.

Gefällte, anorganische Partikel, bevorzugt Oxide, sind Partikel, die über eine Fällungsreaktion hergestellt wurden, bei der die Reaktanten zunächst im Lösungsmittel gelöst vorliegen. Durch geeignete Induzierung einer chemischen Reaktion erhält man mindestens ein Produkt der Reaktion, das in einem Lösungsmittel un- oder schwerlöslich ist, und aus der Lösung durch Abkühlen ausfällt. Das ausgefällte Produkt liegt in partikulärer Form vor und kann als gefällte Partikel gemäß der vorliegenden Erfindung verwendet werden.

Dabei können die gefällten anorganischen Partikel direkt als Binderpartikel eingesetzt werden. In einer anderen Ausführungsform sind die gefällten, anorganischen Partikel des Binders Partikel, die über eine Fällungsreaktion und anschließendem Mahlen, bevorzugt mit einer Perlmühle oder Stiftmühle, hergestellt werden. Die Verwendung von gefällten, anorganischen Partikeln ermöglicht eine signifikante Reduktion der Mahldauer gegenüber flammpyrolytisch erzeugten Partikeln, oder Partikeln, die über einen Sol-Gel-Prozess hergestellt sind. Deswegen sind die Beschichtungsmaterialien der vorliegenden Erfindung kostengünstiger herstellbar. Die Partikel können sowohl als einzelne Primärpartikel als auch in der Form von Aggregaten vorliegen und als Binder eingesetzt werden.

Der Grund für die verbesserten Haftungseigenschaften der erfindungsgemäßen Binderpartikel im Vergleich zu den Binderpartikeln aus dem Stand der Technik ist nicht bekannt und daher überraschend. Allerdings zeigen gefällte Partikel, d.h. Partikel, die über eine Fällungsreaktion hergestellt wurden, andere Eigenschaften, als Partikel, die über einen Sol-Gel-Prozess hergestellt wurden, bzw. wie Partikel, die flammpyrolytisch hergestellt wurden. Die gefällten Partikel besitzen eine spezifische BET Oberfläche von 200-500 m²/g. Im Vergleich dazu besitzen flammpyrolytisch hergestellte Partikel bei vergleichbaren Partikelgrößen geringere spezifische BET Oberflächen, wie z.B. 50m²/g. Dies ist dadurch zu erklären, dass gefällte anorganische Partikel zumindest in Ausführungsformen porös sind, während flammpyrolytisch hergestellte Partikel zumindest zum Teil bzw. bei kleinen Partikelgrößen nichtporös sind. Weiter besitzen gefällte Partikel in Ausführungsformen einen pH-Wert von 6-10, bevorzugt von 7-9. In Gegensatz dazu liegt der pH-Wert von flammpyrolytisch hergestellten Partikeln niedriger, z.B. im Bereich von 3-5. In der folgenden Tabelle sind die physikalischen Eigenschaften von zwei Ausführungsformen entsprechender Partikel zusammengefasst.

| | **Gefälltes Titandioxid Hombikat 8602** | **Flammpyrolytisch hergestelltes Titandioxid Aeroxide TiO₂ P25** |
|---|---|---|
| TiO₂-Gehalt [%] | > 85 | >99,5 |
| Spezifische Oberfläche [m²/g] | > 250 | 50 +/- 15 |
| Glühverlust [%] | < 20 | < 2,0 |
| Primärteilchengröße [nm] | 5 - 10 | 21 |
| pH-Wert | 7 - 8,5 | 3,5 - 4,5 |

Im Hinblick auf die herkömmlichen Binderpartikel der DE 101 50 825 A1 haben die Erfinder weiter festgestellt, dass die in der einen Ausführungsform verwendeten Binder auf der Basis von Glas oder Ton etc., die einen mittleren Durchmesser von 0,5 bis 10 µm aufweisen, eine noch ungenügendere Haftung aufweisen, als die der anderen Ausführungsform der DE 101 50 825 A1, die Binderpartikel verwendet, die über einen Sol-Gel-Prozess hergestellt sind und eine mittlere Partikelgröße von kleiner als 100 nm aufweisen.

Es könnte daher vermutet werden, dass die mittlere Partikelgröße der Binderpartikel allgemein einen Einfluss auf die Haftungseigenschaften des Binders hat, nämlich in der Art, dass eine Verringerung der mittleren Partikelgröße eine Verbesserung der Haftung bedingt. Allerdings haben Partikel mit kleineren Partikelgrößen, insbesondere von kleiner als 100 nm, den Nachteil, dass sie schwieriger herstellbar und verarbeitbar sind.

Die gefällten, organischen Partikel des Binders der vorliegenden Erfindung haben den Vorteil, dass sie keinen Beschränkungen im Hinblick auf die mittlere Partikelgröße unterliegen, um eine verbesserte Haftung im Vergleich zu den Partikeln aus dem Stand der Technik zu erzielen. Es können daher Partikel mit einem mittleren Partikeldurchmesser von 100 nm oder kleiner verwendet werden. Es ist aber auch möglich mittlere Partikelgrößen von größer als 100 nm einzusetzen, bevorzugt von 150 nm bis 1.000 nm, stärker bevorzugt 200 nm bis 750 nm, insbesondere bevorzugt von 250 nm bis 500 nm. Sogar solche erfindungsgemäßen Partikel mit einem mittleren Partikeldurchmesser von > 100 nm weisen dabei eine verbesserte Haftung auf. Gleichzeitig hat die Verwendung von Partikeln mit einen mittleren Partikeldurchmesser von > 100 nm den Vorteil, dass die Partikel einfach herstellbar und verarbeitbar sind.

Überraschenderweise zeigt es sich, dass bei den erfindungsgemäßen Bindern die Haftungseigenschaften der Beschichtung auch bei deutlich größeren Partikeldurchmessern positiv sind, d.h. die gefällten anorganischen Partikel, die im Binder eingesetzt werden, haben den Vorteil, dass insbesondere auch bei einer mittleren Partikelgröße von größer 100 nm hervorragende Haftungseigenschaften erzielbar sind.

Die mittlere Partikelgröße gemäß der vorliegenden Erfindung bezieht sich auf den D50 Wert des Partikeldurchmessers, der mittels dynamischer Lichtstreuung bei zwei Winkeln und NIBS-Optik (Non-Invasive Back Scatter) gemessen wird. Dazu kann z.B. das Zetasizer Nano ZS-Gerät der Fa. Malvern Instruments genutzt werden. Zur Berechnung der Partikelgröße wird davon ausgegangen, dass die Partikel sphärisch sind.

Erfindungsgemäß sind die gefällten, anorganischen Partikel des Binders ausgewählt aus der Gruppe umfassend Al₂O₃, TiO₂, ZrO₂ oder Gemische davon, bevorzugt TiO₂. Diese Verbindungen sind leicht und kostengünstig über eine Fällungsreaktion erhältlich. Weiter weisen sie eine hohe Kompatibilität mit den anderen Komponenten der Beschichtung bzw. dem Substrat auf, was gute Haftungseigenschaften bedingt.

Erfindungsgemäß ist es vorgesehen, dass der Binder porös ist. Die Poren des Binders liegen bevorzugt offen porös vor. Somit ist gewährleistet, dass die poröse Struktur der Beschichtung erhalten bleibt, und die selbstreinigende Eigenschaft der Beschichtung nicht beeinträchtigt wird.

Zusätzlich zum Binder weist das Beschichtungsmaterial gemäß der vorliegenden Erfindung poröse Partikel auf, die maßgeblich für die selbstreinigenden Eigenschaften der Beschichtung verantwortlich sind. In Ausführungsformen können für die porösen Partikel der vorliegenden Erfindung die porösen Partikel gemäß der DE 101 50 825 A1 eingesetzt werden.

Bevorzugt weist das Beschichtungsmaterial eine poröse Struktur aus dem porösen Partikel und dem Binder auf, wobei die porösen Partikel in ihren Poren keine feste oder flüssige Zweitphase aufweisen.

Insbesondere besitzen die porösen Partikel eine mittlere Partikelgröße von 1 bis 100 µm. Bevorzugte Größen liegen bei 10 bis 80 µm, bei 20 bis 60 µm, sowie bei 30 bis 50 µm.

Die Poren der porösen Partikel sind entweder in einer Größenordnung, dass die Verunreinigungen nicht eindringen können, erfindungsgemäß unter 1 µm, bevorzugt 0,1 bis 0,6 µm. Im Falle von größeren Poren mit einem mittleren Porendurchmesser von 1 µm müssen die Partikel des Binders porös sein. Die Verwendung von porösen Binderpartikeln verhindert das Eindringen von Verunreinigungen in die porösen Partikel, und gewährleistet eine Bindung der Partikel untereinander und zum Substrat. Für den Fall, dass die Poren der porösen Partikel genügend klein sind (d.h. kleiner 1 µm) kommt dem Binder eine ausschließliche Bindefunktion zu, d.h. die Binderpartikel müssen in einem solchen Fall nicht notwendigerweise porös sein. In einem solchen Fall werden die porösen Partikel des Beschichtungsmaterials vorzugsweise nicht vollständig vom Binder umhüllt, sondern nur an den Kontaktpunkten zwischen zwei benachbarten porösen Partikeln mit dem Binder versehen. Dies garantiert, dass möglichst viele Poren der porösen Partikel für Luft zugänglich bleiben.

Die Zwischenräume zwischen den porösen Partikeln sind für das Eindringen und Spreiten der flüssigen Lebensmittelreste in die Schicht verantwortlich. Ziel ist eine möglichst gute Verteilung/Spreitung der Verunreinigungen in der Schicht, um die Angriffsfläche für den thermischen Abbau zu maximieren. Die Größenverteilung der Zwischenräume wird im Wesentlichen von der Größe der Partikel und dem Volumenanteil des Binders bestimmt.

Der Volumenanteil des Binders liegt erfindungsgemäß in Ausführungsformen im Bereich von 5 bis 40%, vorzugsweise bei 20 bis 30% oder 15 bis 25%.

Die Zwischenräume zwischen den porösen Partikeln sind in Ausführungsformen deutlich größer als die Poren der porösen Partikel, so dass Verunreinigungen in die Struktur eindringen und spreiten können. Auf diese Weise ist auch immer gewährleistet, dass Sauerstoff für den thermischen Abbau in Kontakt mit den zu entfernenden Verunreinigungen steht, da die Poren der porösen Partikel immer wieder regenerieren, d.h. Luft aufnehmen können.

Die Dicke der Beschichtung ist wenigstens 50 µm, vorzugsweise 100 bis 500 µm, besonders bevorzugt 150 bis 450 µm, 200 bis 40 µm oder 250 bis 350 µm. Größere Schichtdicken sind zwar technisch realisierbar und auch sinnvoll, aber aus wirtschaftlichen Gründen nicht interessant. Beträgt die Dicke der Beschichtung hingegen in Ausführungsformen weniger als 50 µm, bietet diese keine genügend großes Porenvolumen der Poren.

Die erfindungsgemäßen Beschichtungsmaterialien sind hochtemperaturstabil und abriebbeständig. Die Beschichtungsmaterialien enthalten sowohl große Poren/Porenvolumina, die für organische Verschmutzungen (z.B. Fett) zugänglich sind, als auch über die porösen Partikel kleine Poren, die für die organischen Verschmutzungen nicht zugänglich sind. Die erfindungsgemäßen Beschichtungsmaterialien besitzen ein sehr hohes Saugvermögen und transportieren die organischen Verunreinigen (z.B. Fett oder Bratensäfte) zunächst in das Innere der Beschichtung Dort werden die Verunreinigungen aufgespreitet, d.h. auf einer sehr großen Oberfläche verteilt. Bei einer Temperatur von 250°C werden alle Verunreinigungen nahezu vollständig zersetzt und dies ohne, dass die Schicht einen Katalysator enthält. Durch das gezielte Abstimmen des Binders und der Tatsache, dass der Binder gefällte, anorganische Partikel aufweist, wird eine sehr hohe innere Oberfläche, bevorzugt größer als 20 m²/g, besonders bevorzugt größer als 70 m²/g und besonders bevorzugt größer als 120 m²/g, erzeugt, die mit organischen Verunreinigungen beladen wird. Andererseits wird der zur Verbrennung notwendige Reaktionspartner Sauerstoff bereits in den porösen Partikeln, ähnlich einem Reservoir gespeichert, und steht unmittelbar zur Verfügung, so dass die oxidative Verbrennung der Verunreinigungen frühzeitig eingeleitet und nahezu quantitativ bei 250°C durchgeführt wird.

Somit können selbstreinigende Beschichtungen für Backöfen hergestellt werden, die bei Temperaturen deutlich unter 380°C, bevorzugt unter 320°C organische Verunreinigungen nahezu quantitativ entfernen. Dabei ist es nicht notwendig in die Schicht einen Katalysator einzubringen; die erfindungsgemäße Beschichtung ermöglicht es die organische Verunreinigungen auf einer sehr großen Fläche aufzuspreiten und dem für die Oxidation notwendigen Reaktionspartner in Form eines Reservoirs in der Schicht bereitzustellen, so dass die erwünschte Reinigung ohne Katalysator erfolgen kann.

Das erfindungsgemäße Verfahren zur Herstellung der selbstreinigenden Beschichtung auf einem Teil bzw. in einem Koch-, Brat-, Back- oder Grillgerät umfasst das Aufbringen des erfindungsgemäßen Beschichtungsmaterials auf mindestens eine Oberfläche des Teils. Das Aufbringen der Schicht kann dabei durch alle gängigen Beschichtungsverfahren erfolgen.

In einer bevorzugten Ausführungsform eines Beschichtungsverfahrens wird das Beschichtungsmaterial in Form einer Suspension aufgebracht, die durch Suspendieren der porösen Partikel und dem Binder mit einem Suspensionsmedium unter Zuhilfenahme eines Suspensionsmittels hergestellt wird. Dadurch ist eine kostengünstige und schnelle, und einheitliche Auftragung des Beschichtungsmaterials ermöglicht. Insbesondere erfolgt das Auftragen der Suspension des Beschichtungsmaterials über Spin Coating, Tauchen, Fluten oder Sprühen.

In einer bevorzugten Ausführungsform beinhaltet das Verfahren weiter den Schritt des Trocknens der aufgebrachten Suspension bei Temperaturen bis zu 1.200°C, bevorzugt zwischen 200°C und 1.000°C, besonders bevorzugt zwischen 650°C und 850°C. So sind neben einer einfachen Verfahrensführung gute mechanische Eigenschaften der Beschichtung, wie z.B. eine gute Abriebsfestigkeit, sowie eine gute Haftung zum Substrat möglich.

Das Suspensionsmedium ist in Ausführungsformen ausgewählt aus der Gruppe, umfassend Alkohole, bevorzugt 2-Butoxyethanol, Ethanol, 1-Propanol, 2-Propanol. Alternativ oder in Kombination dazu kann Wasser als Suspensionsmedium verwendet werden. Bevorzugt ist aus Kostengründen das Suspensionsmedium Wasser.

Das Suspensionsmittel ist in bevorzugten Ausführungsformen Salpetersäure oder eine wässrige Lösung von Salpetersäure. Durch das Suspensionsmittel Salpetersäure kann die Viskosität der Suspension geeignet eingestellt werden. Bevorzugt verringert sich die Viskosität der Suspension durch den Einsatz eines Suspensionsmittels, so dass ein schnelleres und einheitlicheres Auftragen der Suspension möglich ist. Insbesondere bei der Verwendung von gefälltem TiO₂ als Binderpartikel lässt sich mit Salpetersäure als Suspensionsmittel ein Beschichtungsmaterial bzw. eine selbstreinigende Beschichtung herstellen, die eine hervorragende Haftung auf dem Substrat zeigt.

Der Feststoffgehalt in der Suspension liegt in Ausführungsformen zwischen 1 und 20 Gew.-%, bevorzugt zwischen 5 und 15 Gew.-%. Geringere Feststoffgehalte verzögern die Verfahrensgeschwindigkeit. Höhere Feststoffgehalte sind ggf. mit Nachteilen im Hinblick auf eine einheitliche Schichtdicke verbunden.

Die Erfindung betrifft weiter ein Teil an bzw. in einem Koch-, Brat-, Back- oder Grillgerät, insbesondere eine Backoffenmuffel, das gemäß diesem Verfahren hergestellt wird. Weiter bezieht sich die Erfindung auf ein Koch-, Brat-, Back- und Grillgerät, insbesondere einen Ofen oder einen Herd, das ein entsprechendes Teil aufweist. Teile von bzw. in Koch-, Brat-, Back- oder Grillgeräten im Sinne der vorliegenden Erfindung sind nicht zur Einhänge- oder Schubteile für Ofen und Herd, sondern auch die Innenseiten von Backofenmuffeln, also der Ofen- oder Herdinnenraum (Backraum) und Fritteusen, grundsätzlich alle Metalle-, Glas-, mit Metall beschichteten oder emaillierten Teile von Geräten wie Öfen, Herden, Grills etc., die bei Gebrauch direkt oder indirekt erhitzt werden und die nicht in direktem Kontakt mit dem Gargut stehen. Gemäß einer bevorzugten Ausgestaltung der Erfindung handelt es sich bei den zu beschichteten Teilen um emaillierte Teile, z.B. emailliertem Stahl, d.h. einem Stahl, der mit einer Emaille-Schicht einer Dicke in der Größenordnung von 100 µm, die dem Korrosionsschutz dient, versehen ist.

## Patentansprüche

1. Beschichtungsmaterial, geeignet für eine selbstreinigende Beschichtung auf einem Teil an bzw. in einem Koch-, Brat-, Back- oder Grillgerät zum Entfernen von Lebensmittelresten ohne mechanische Einwirkung, wobei das Beschichtungsmaterial poröse Partikel aus Al₂O₃ und einen Binder aufweist, wobei der Binder aus gefällten, anorganischen Partikeln besteht, die ausgewählt sind aus der Gruppe, umfassend Al₂O₃, TiO₂, ZrO₂ oder Gemische davon, wobei die gefällten, anorganischen Partikel poröse Partikel sind, die eine spezifische BET Oberfläche von 200-500 m²/g besitzen.

2. Beschichtungsmaterial nach Anspruch 1, wobei die gefällten, anorganischen Partikel des Binders Partikel sind, die über eine Fällungsreaktion und anschließendem Mahlen, bevorzugt mit einer Perlmühle oder Stiftmühle, hergestellt sind.

3. Beschichtungsmaterial nach Anspruch 1 oder 2, wobei die gefällten, anorganischen Partikel des Binders eine mittlere Partikelgröße von > 100 nm, bevorzugt von 150 nm bis 1.000 nm, mehr bevorzugt 200 nm bis 750 nm, insbesondere bevorzugt von 250 nm bis 500 nm aufweisen.

4. Beschichtungsmaterial nach einem der vorhergehenden Ansprüche, wobei die gefällten, anorganischen Partikel des Binders TiO₂ umfassen.

5. Beschichtungsmaterial nach einem der vorhergehenden Ansprüche, wobei der Binder eine poröse Struktur aufweist und offenporig ist.

6. Beschichtungsmaterial nach einem der vorhergehenden Ansprüche, wobei das Beschichtungsmaterial eine poröse Struktur aus den porösen Partikeln und dem Binder aufweist, wobei die porösen Partikel in ihren Poren keine feste oder flüssige Zweitphase aufweisen.

7. Verfahren zur Herstellung einer selbstreinigenden Beschichtung auf einem Teil an bzw. in einem Koch-, Brat-, Back- oder Grillgerät, umfassend das Aufbringen eines Beschichtungsmaterials gemäß einem der Ansprüche 1 bis 6 auf mindestens eine Oberfläche des Teils.

8. Verfahren nach Anspruch 7, wobei das Beschichtungsmaterial in Form einer Suspension aufgebracht wird, die durch Suspendieren der porösen Partikel und dem Binder mit einem Suspensionsmedium unter Zuhilfenahme eines Suspensionsmittels hergestellt wird.

9. Verfahren nach Anspruch 7, wobei das Auftragen der Suspension des Beschichtungsmaterials über Spin Coating, Tauchen, Fluten, oder Sprühen erfolgt.

10. Verfahren nach einem der Ansprüche 7 oder 8, weiter umfassend das Trocknen der aufgebrachten Suspension bei Temperaturen bis zu 1.200 °C, bevorzugt zwischen 200 °C und 1.000 °C und besonders bevorzugt zwischen 650 °C und 850 °C

11. Verfahren nach einem der Ansprüche 7 bis 10, wobei das Suspensionsmedium ausgewählt ist aus der Gruppe, umfassend Alkohole, bevorzugt 2-Butoxyethanol, Ethanol, 1-Propanol, 2-Propanol, und/oder Wasser.

12. Verfahren nach einem der Ansprüche 7 bis 11, wobei das Suspensionsmittel Salpetersäure oder eine wässrige Lösung von Salpetersäure ist.

13. Verfahren nach einem der Ansprüche 7 bis 12, wobei der Feststoffgehalt in der Suspension zwischen 1 und 20 Gew.-%, bevorzugt zwischen 5 und 15 Gew.-% liegt.

14. Teil an bzw. in einem Koch-, Brat-, Back- oder Grillgerät, insbesondere eine Backofenmuffel, das hergestellt ist gemäß dem Verfahren nach einem der Ansprüche 7 bis 13.

15. Koch-, Brat-, Back- und Grillgerät, insbesondere ein Ofen oder Herd, das ein Teil nach Anspruch 14 aufweist.

## Claims

1. Coating material, suitable for a self-cleaning coating on a part on or in a cooking, frying, baking or grilling appliance for removing residual foodstuffs without mechanical intervention, wherein the coating material has porous particles consisting of Al₂O₃ and a binder, wherein the binder consists of precipitated, inorganic particles, which are selected from the group comprising Al₂O₃, SiO₂, TiO₂, ZrO₂ or mixtures of these, wherein the precipitated, inorganic particles are porous particles which possess a specific BET surface area of 200-500 m²/g.

2. Coating material according to claim 1, wherein the precipitated, inorganic particles of the binder are particles which are produced via a precipitation reaction and subsequent grinding, preferably by a bead mill or pin mill.

3. Coating material according to claim 1 or 2, wherein the precipitated, inorganic particles of the binder have an average particle size of > 100 nm, preferably from 150 nm to 1,000 nm, more preferably 200 nm to 750 nm, particularly preferably from 250 nm to 500 nm.

4. Coating material according to one of the preceding claims, wherein the precipitated, inorganic particles of the binder comprise TiO₂.

5. Coating material according to one of the preceding claims, wherein the binder has a porous structure and is open-pored.

6. Coating material according to one of the preceding claims, wherein the coating material has a porous structure consisting of the porous particles and the binder, wherein the porous particles have no solid or liquid second phase in their pores.

7. Method for producing a self-cleaning coating on a part on or in a cooking, frying, baking or grilling appliance, comprising the application of a coating material according to one of claims 1 to 6 onto at least one surface area of the part.

8. Method according to claim 7, wherein the coating material is applied in the form of a suspension, which is produced by suspending the porous particles and the binder with a suspension medium with the aid of a suspension agent.

9. Method according to claim 7, wherein the application of the suspension of the coating material takes place via spin coating, immersion, flooding or spraying.

10. Method according to one of claims 7 or 8, further comprising the drying of the applied suspension at temperatures of up to 1,200 °C, preferably between 200 °C and 1,000 °C, and particularly preferably between 650 °C and 850 °C.

11. Method according to one of claims 7 to 10, wherein the suspension medium is selected from the group comprising alcohols, preferably 2-butoxyethanol, ethanol, 1-propanol, 2-propanol, and/or water.

12. Method according to one of claims 7 to 11, wherein the suspension agent is nitric acid or an aqueous solution of nitric acid.

13. Method according to one of claims 7 to 12, wherein the solid content in the suspension lies between 1 and 20 % by weight, preferably between 5 and 15 % by weight.

14. Part on or in a cooking, frying, baking or grilling appliance, in particular a baking oven muffle, which is produced in accordance with the method according to one of claims 7 to 13.

15. Cooking, frying, baking or grilling appliance, in particular an oven or stove, which has a part according to claim 14.

## Revendications

1. Matériau de revêtement, adapté à un revêtement autonettoyant sur une pièce située sur ou dans un appareil de cuisson, de friture, de rôtissage ou de grill destiné à éliminer des résidus d'aliment sans action mécanique, dans lequel le matériau de revêtement comprend des particules poreuses d'Al₂O₃ et un liant, dans lequel le liant est constitué de particules inorganiques précipitées, qui sont sélectionnées parmi le groupe comprenant Al₂O₃, TiO₂, ZrO₂ ou des mélanges d'entre eux, dans lequel les particules inorganiques précipitées sont des particules poreuses, qui présentent une surface spécifique selon BET de 200 à 500 m2/g.

2. Matériau de revêtement selon la revendication 1, dans lequel les particules inorganiques précipitées du liant sont des particules qui sont fabriquées par une réaction de précipitation et un broyage subséquent, de préférence au moyen d'un broyeur à billes ou d'un broyeur à broches.

3. Matériau de revêtement selon la revendication 1 ou 2, dans lequel les particules inorganiques précipitées du liant ont une taille moyenne de particule > 100 nm, de préférence de 150 nm à 1.000 nm, de manière plus préférée de 200 nm à 750 nm et de manière encore plus préférée de 250 nm à 500 nm.

4. Matériau de revêtement selon l'une des revendications précédentes, dans lequel les particules inorganiques précipitées du liant comprennent du TiO₂.

5. Matériau de revêtement selon l'une des revendications précédentes, dans lequel le liant comprend une structure poreuse et est à pores ouverts.

6. Matériau de revêtement selon l'une des revendications précédentes, dans lequel le matériau de revêtement présente une structure poreuse constituée des particules poreuses et du liant, dans lequel les particules poreuses ne comprennent dans leurs pores aucune deuxième phase solide ou liquide.

7. Procédé de fabrication d'un revêtement autonettoyant sur une pièce située sur ou dans un appareil de cuisson, de friture, de rôtissage ou de grill, comprenant l'application d'un matériau de revêtement selon l'une des revendications 1 à 6 sur au moins une surface de la pièce.

8. Procédé selon la revendication 7, dans lequel le matériau de revêtement est appliqué sous forme d'une suspension, qui est produite par une mise en suspension des particules poreuses et du liant avec un milieu de suspension en utilisant un agent de mise en suspension.

9. Procédé selon la revendication 7, dans lequel l'application de la suspension du matériau de revêtement s'effectue par centrifugation, immersion, submersion ou pulvérisation.

10. Procédé selon l'une des revendications 7 ou 8, comprenant en outre le séchage de la suspension appliquée à des températures jusqu'à 1200 °C, de préférence entre 200 °C et 1000 °C et de manière plus préférée entre 650 °C et 850 °C.

11. Procédé selon l'une des revendications 7 à 10, dans lequel le milieu de suspension est choisi parmi le groupe comprenant des alcools, de préférence du 2-butoxyéthanol, de l'éthanol, du 1-propanol, du 2-propanol et/ou de l'eau.

12. Procédé selon l'une des revendications 7 à 11, dans lequel l'agent de mise en suspension est de l'acide nitrique ou une solution aqueuse d'acide nitrique.

13. Procédé selon l'une des revendications 7 à 12, dans lequel la teneur en matières solides dans la suspension est entre 1 et 20 % en poids, de préférence entre 5 et 15 % en poids.

14. Pièce située sur ou dans un appareil de cuisson, de friture, de rôtissage ou de grill, en particulier moufle de four, qui est fabriqué selon le procédé selon l'une des revendications 7 à 13.

15. Appareil de cuisson, de friture, de rôtissage ou de grill, en particulier four ou cuisinière, qui comprend une pièce selon la revendication 14.
